Europäisches Patentamt

(19) European Patent Office

Office européen des brevets

(11) Publication number: **0 397 189**
**A2**

# EUROPEAN PATENT APPLICATION

(21) Application number: 90108901.1

(22) Date of filing: 11.05.90

(51) Int. Cl.5: **C04B 28/04, C04B 7/19, C04B 7/02, //(C04B28/04, 18:14,22:00,24:18),(C04B28/04, 18:06,22:00,24:18)**

(30) Priority: 11.05.89 CS 2826/89

(43) Date of publication of application:
**14.11.90 Bulletin 90/46**

(84) Designated Contracting States:
**AT CH DE DK FR GB IT LI NL SE**

(71) Applicant: **Ceskoslovenska akademie ved**
**Narodni trida 3**
**Praha 1(CS)**

(72) Inventor: **Skvára, Frantisek, RNDr.**
**Jireckova 18**
**Praha(CS)**
Inventor: **Dúrovec, Pius**
**Prachovice 189,**
**Praha(CS)**
Inventor: **Cernovsky, Bohumil**
**Slov. povstáni 777**
**Hermanùv Mestec(CS)**
Inventor: **Vsetecka, Tomás**
**Semická 3291**
**Praha(CS)**
Inventor: **Hrazdira, Jaroslav**
**U. mat.skoly 197**
**Brandysek(CS)**
Inventor: **Kadlec, Zdenek**
**Zdárec u Sece 14**
**Praha(CS)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) **Mixed gypsumless portland cement and its production.**

(57) The invention relates to mixed gypsumless Portland cement the application of which enables to achieve high initial and long-lasting strength. The cement contains 60 to 96.7 mass-% of gypsumless Portland cement clinker with a specific surface of 350 to 550 $m^2$/kg, 3 to 40 mass-% of ground latently hydraulic matter, such as granulated blast-furnace slag, light ash etc., these two components having been ground in the presence of 0.01 to 0.1 mass-% of a liquid milling admixture, advantageously with a synthetical surface-active matter with wetting properties, and containing further 0 to 20 mass-% of fine amorphous $SiO_2$ and/or 0.1 to 3 mass-% of a sulfonated polyelectrolyte or ligninsulfonate, and from 0.5 to 6 mass-% of an alkali carbonate, hydrogen carbonate or hydroxide.

# MIXED GYPSUMLESS PORTLAND CEMENT AND ITS PRODUCTION

The invention relates to gypsumless mixed Portland cement based on cement clinker mixed with latently hydraulic admixtures, and a method for producing this cement.

It is already known to replace a part of the clinker in a cement by latently hydraulic matters. Before all, these matters are granulated blast, such as furnace slag, pozzolana etc., and more frequently also light ash. Actually, mixed cements form a considerable part of the world-wide production of cements: More than 90 millions of tons of matters with latently hydraulic admixtures as compared with an overall production of more than 280 millions of tons of mixed cements, and a production of more than 50 millions of tons of cements with use of slags and ashes, (cf. R. Bucchi, Outlines on additions and composite cements of view of industry, Proc. 8. Inter. Congress of Cement, Rio de Janeiro 1986, Vol. I. pp. 185-195).

There is also known a method enabling a better exploitation of the hydraulic properties of ground slags via slag-alkaline cements and concretes (of. V.D. Gluchovskij,

Ščoločnonyje i ščoločnozemelnyje gidravličeskije

vjažuščije

i betony, Kiev 1979, 1982). According to this prior art, alkaline compounds, namely silicates and hydroxides, are used in considerably higher concentrations as compared with the practice up to now, i.e. from 5 to 10 mass-% of the ground slag.

SU 1 046 222 relates to the composition of binding agents containing more than 60 mass-% of slag ground at least to the specific surface of 300 $m^2$/kg, 7.5 to 9 mass-% of a 20 % solution of KOH, and 22 to 27 mass-% of a solution of sodium silicate.

From CS 224 163 is known a binding agent based on a hydraulicly active gypsumless substance containing 0 to 40 mass-% of ground cement clinker with a specific surface of 250 to 700 $m^2$ kg, 100 to 40 mass-% of ground latently hydraulic matter, e.g. slag, light ash, pozzolana, with a specific surface of 300 to 600 $m^2$ kg, 0 to 20 mass-% of very fine $SiO_2$ and/or containing milling admixtures, such as ligninsulfonates, and further containing batch water, a synergically acting mixture of substances containing 0.2 to 3 mass-% of sulfonated or sulfomethylated condensation products of monovalent or multivalent phenols with formaldehyde doped eventually with ferric, aluminium or chromium cations, and 0.5 to 10 mass-% of an alkaline metal or alkaline earth metal salt, the mass percentages of the matters being based on the overall mass of the powdery binding agent.

From the technical literature is also known to add slag ground to specific surface of more than 500 $m^2$ kg to Port land cement (K. Sato, E. Konishi, K. Fukaya, Properties of very fine blast furnace slag prepared by classification, Proc. 8. Inter. Congress of Cement, Rio de Janeiro 1986. vol. 4, p. 239).

The disadvantage of mixed cements is the slow growth of the initial strength. The hydration process can be accelerated by some known methods, especially through addition of accelerating substances, e.g. gypsum, calcium hydroxide, and other alkaline salts. The hydration process can also be accelerated by grinding the slag to a higher specific surface. In contradistinction to the cement clinker slags ground beyond a specific surface of 500 $m^2$/kg they are not of practical use.

The mentioned disadvantage has been overcome by the mixed gypsumless Portland cement according to the invention. The substance of the cement contains 60 to 96.7 mass-% of gypsumless Portland cement clinker having a specific surface of 350 to 550 $m^2$/kg, 3 to 40 mass-% of a ground latently hydraulic matter, as e.g. granulated ground slag, light ash, etc., both these components having been ground in the presence of 0.01 to 0.1 mass-% of a liquid milling admixture, advantageously with a synthetic surface-active substance with wetting properties. The cement further may contain up to 20 mass-% of finely amorphous $SiO_2$ and/or 0.1 to 3 mass-% of a sulfonated polyelectrolyte, e.g. a sulfonated polyphenolate or ligninsulfonate, and 0.5 to 6 mass-% of an alkali carbonate or hydroxide.

Systematic experimental works have proved the possibility to realize binding agents based on the mixed cement according to the invention achieving high both initial and long-term strength. The use of the liquid milling admixture, especially of those having wetting properties is very advantageous in milling the mixed cement and/or its different components. High initial strength is achieved due to the elimination of gypsum replaced by synergically acting mixtures of sulfonated polyelectrolytes, e.g. the sulfonated polyphenolates or ligninsulfonates, and alkali salts, especially carbonates. The latently hydraulic substance has been ground to a specific surface which exceeds that of current mixed cements, i.e. to a specific surface in the range from 350 to 550 m²/kg.

The invention will be further explained by way of examples. All percent data given in the examples and tables are by mass, based on the mass of the clinker.

Example 1

From a commercial cement clinker (cement works in Prachovice) and granulated blast-furnace slag (from Trinec) have been prepared mixed gypsumless cements ground in a ball mill, with 0.05 % cement liquid milling admixture added (commercial preparation ABESON TEA (sodium alkylarylsulfonate)). Mixed cements have been prepared by grinding to the specific surface of 420 to 470 m²/kg in different cement-to-slag ratios. From the different mixtures have been prepared mortars with a cement-water ratio of w = 0.31 and with a ratio of cement : sand of continuous granulometry = 1 : 3.

Table 1 shows the achieved properties. Admixtures used have been soda and Kortan FN (sodium - ferric polyphenolate with addition of triethanolamine) dissolved in batch water.

Example 2

From a commercial cement clinker (cement works in Prachovice) and granulated blast-furnace slag has been prepared a mixed cement with a specific surface of 530 m²/kg. The composition of the cement has been the following: clinker 80%, slag 20 %. 0.05 % of the commercial preparation ABESON TEA have been used as milling admixture. From this cement have been prepared pastes with a cement-water ratio of w = 0.24 and a freely liquid consistency. Admixtures used have been soda and Kortan FN. Table 2 shows the properties of these pastes.

Example 3

Cement clinker (cement works in Prachovice) has been ground with granulated blast-furnace slag to give the mixed cement of a specific surface of 460 m²/kg. The amount of slag in the cement was 10 %. In a homogenizer, further admixtures have been added to the cement, namely 0.2 % of Kortan FN and 0.5 % of soda. This cement has been worked up as a cement of plastic consistency with w = 0.22. The initial setting of this cement began after 3 minutes. 15 minutes after the preparation it reached a compression strength of 1.6 MPa, after one hour 2.5 MPa, after two hours 4 MPa, after four hours 8 MPa, and after 5 hours 12 MPa. The achieved strength after 24 hours was equal to 35 MPa.

A cement for which both the clinker and the slag had been ground separately to a specific surface of 450 M²/kg, and had been mixed prior to further treatment, has the same properties in practice.

Example 4

A commercial cement clinker (cement works in Prachovice) has been ground together with blast furnace slag to a mixed cement with a specific surface of 440 m²/kg with liquid milling admixture added. From this mixed cement a paste with w = 0.24 of freely liquid consistency and setting starting after 50 minutes has been prepared. Admixtures used were 0.4 % of Kortan FN and 1 % of soda. The compression strength of the paste was 3.5 MPa ater two hours after the setting, 10 MPa after 4 1/2 hours, 55 MPa after 24 hours, and 89 MPa after 28 days.

From the same cement has been prepared a mortar with w = 0.31 of from plastic to soft consistency with the use of sand (0-6.3 mm, from Halámky). Admixtures used were 0.8 % of Kortan FN and 1.9 % of soda. The setting of this mortar started after 50 minutes.

Table 1

| Content of Slag in Cements (%) | Content of Admixtures | Density (kg/m³) | Start of Setting (min) | Compression Strength (MPa) | |
|---|---|---|---|---|---|
| | | | | after 24 hours | after 3 days |
| 5 | Kortan 0.7 % + Soda 1.9 % | 2382 | 105 | 46.8 | 53.6 |
| 10 | Kortan 0.7 % + Soda 2 % | 2402 | 65 | 42.6 | 51.2 |
| 15 | Kortan 0.7 % + Soda 2.1 % | 2382 | 65 | 41.1 | 49.2 |
| 20 | Kortan 0.7 % + Soda 2.2 % | 2343 | 55 | 39.0 | 48.0 |
| 30 | Kortan 0.7 % + Soda 2.4 % | 2324 | 40 | 30.0 | 40.0 |
| 0 | Kortan 0.6 % + Soda 1.6 % | 2324 | 45 | 42.0 | 45.1 |
| Comparative Experiment according to CS 244 163 | | | | | |
| 80 % | Kortan 0.6 % + Soda 4 % | 2300 | 120 | 3.2 | 15.1 |

Table 2

| Admixtures (%) | | Compression Strength (MPa) | | | | | | |
|---|---|---|---|---|---|---|---|---|
| Soda | Kortan FN | After: 2 h | 3 h | 5 h | 6 h | 24 h | 7 days | 28 days |
| 1 | 0.4 | 4.4 | 6.3 | 9.4 | - | 65.5 | 75.0 | 98.0 |
| 1 | 0.5 | 3.5 | 4.8 | 7.0 | 16.5 | 58.5 | 72.0 | 90.6 |
| 1 | 0.6 | 2.5 | 3.5 | 5.6 | 7.1 | 60.0 | 83.5 | 102.4 |
| 1.2 | 0.4 | 4.0 | 5.3 | 7.5 | - | 58.0 | 76.0 | 97.6 |
| 1.2 | 0.5 | 3.6 | 5.3 | 7.5 | - | 59.0 | 74.0 | - |
| 1.2 | 0.6 | 3.3 | 3.9 | 5.8 | - | 59.5 | 80.5 | - |
| 1.4 | 0.4 | 4.3 | 6.5 | 11.3 | - | 66.0 | 87.5 | - |
| 1.4 | 0.5 | 3.5 | 6.3 | 8.6 | - | 54.0 | 71.5 | - |
| 1.4 | 0.6 | 2.3 | 3.6 | 6.3 | - | 61.5 | - | - |
| 1.6 | 0.4 | 4.5 | 7.5 | 12.0 | - | 60.5 | - | - |

**Claims**

1. Mixed gypsumless Portland cement **characterized** by

(A) 60 to 96.7 mass-% of gypsumless Portland cement clinker having a specific surface of 350 to 550 m²/kg,

(B) 3 to 40 mass-% of ground, latently hydraulic matter, and

(C) 0.01 to 0.1 mass-% of a liquid milling admixture, and optionally

(D) up to 20 mass-% of finely divided amorphous $SiO_2$; and optionally

(E) 0.1 to 3 mass-% of a sulfurated polyelectrolyte, and optionally

(F) 0.5 to 6.0 mass-% of an alkali carbonate, hydrogen carbonate or hydroxide.

2. The Portland cement according to claim 1, characterized in that the components A and B have been ground in the presence of component C.

3. The Portland cement according to claim 1 or 2, characterized in that component B is selected from ground slag, particularly ground blast furnace slag, and light ashes.

4. The Portland cement according to one of claims 1 to 3, characterized in that component C comprises a synthetic surface-active substance having wetting properties.

5. The Portland cement according to one of claims 1 to 4, characterized in that component C is a sodium alkylarylsulfonate.

6. The Portland cement according to one of claims 1 to 5, characterized in that component E is a sulfonated polyphenolate and/or a lignosulfonate.

7. A method for producing the mixed gypsumless Portland cement according to one of claims 1 to 6, characterized by grinding together or separately

(A) 60 to 96.7 mass-% of gypsumless Portland cement clinker

and

(B) 3 to 40 mass-% of a latently hydraulic matter, in the presence of

(C) 0.01 to 0.1 mass-% of a liquid milling admixture to a specific surface of 350 to 550 $m^2$/kg, and optionally adding

(D) up to 20 mass-% of finely divided amorphous $SiO_2$, optionally adding

(E) 0.1 to 3 mass-% of a sulfonated polyelectrolyte, and optionally adding

(F) 0.5 to 6.0 mass-% of an alkali carbonate, hydrogen carbonate or hydroxide before or after the grinding step.

8. The method according to claim 7, characterized in that a synthetic surface-activ substance having wetting properties is used as component C.

9. The method according to claim 7 or 8, characterized in that a sodium alkyl aryl sulfonate is used as component C.

10. The method according to one of claims 7 to 9, characterized in that a sulfonated polyphenolate and/or a lignosulfonate is used as component E.